# EUROPÄISCHE PATENTANMELDUNG

(11) **EP 2 518 377 A1**
(43) Veröffentlichungstag der Anmeldung: **31.10.2012**
(21) Anmeldenummer: 11164127.0
(22) Anmeldetag: 28.04.2011
(51) Int. Cl.: F16K 15/03

(54) **Rückschlagklappe für eine Rohrleitung**

(71) Anmelder: SIEMENS AKTIENGESELLSCHAFT, 80333 München (DE)
(72) Erfinder: Leu, Bernd, 40670, Meerbusch (DE)

(57) **Zusammenfassung**

Die Erfindung betrifft eine Rückschlagklappe (1), die ein Gehäuse (4) und einen Klappenteller (2) aufweist, wobei auf dem Klappenteller (2) ein Verengungsvorbau (7) derart angeordnet ist, dass zwischen dem Verengungsvorbau (7) und dem Gehäuse (4) ein Umfangs-Strömungskanal (9) gebildet wird, durch den eine Erhöhung der Strömungsgeschwindigkeit des Strömungsmediums erreichbar ist.

## Beschreibung

Die Erfindung betrifft eine Rückschlagklappe umfassend einen Klappenteller, der zum Verschließen und/oder Öffnen einer Klappenöffnung ausgebildet ist und ein Gehäuse, in dem die Klappenöffnung ausgebildet ist, wobei der Klappenteller eine zum Eintritt hin gerichtete Innenseite aufweist.

Des Weiteren betrifft die Erfindung ein Verfahren zum Öffnen und/oder Schließen einer Rückschlagklappe.

Im Strömungsmaschinenbau werden große Anstrengungen unternommen, ein Strömungsmedium mit möglichst wenig Strömungsverlusten in vergleichsweise komplizierten Rohrleitungen zu bewegen. Dabei spielen neben der Strömungsgeschwindigkeit auch die Temperatur und der Druck des Strömungsmediums eine wesentliche Rolle. Darüber hinaus gibt es Situationen, in denen ein Strömungsmedium in lediglich einer Richtung in einem Rohrsystem bewegt werden soll und nicht beispielsweise in die Gegenrichtung. Dafür werden Rückschlagklappen verwendet, die in der Regel derart ausgebildet sind, dass ein Strömungsmedium in die eine Durchlassöffnung nahezu ungehindert strömen kann und in der Gegenrichtung ein Strömen des Strömungsmediums versperrt wird. Dazu werden Klappenteller verwendet. Diese Klappenteller werden in der Regel über einen Hebelarm um eine Schwenkachse derart geschwenkt, dass ein Öffnen des Klappentellers am Rand des Klappentellers ein Strömen in die Strömungsrichtung ermöglicht.

Bei geringen Volumenströmen des Strömungsmediums öffnet sich die Rückschlagklappe nur sehr gering, so dass vergleichsweise kleine Öffnungswinkel ausgebildet sind. Bei Öffnungswinkeln von weniger als 10°C besteht sogar die Gefahr, dass Schwingungen des Klappentellers entstehen und dieser auf den Sitz aufschlägt. Daher können langfristig Schäden an der Rückschlagklappe entstehen.

Eine Abhilfe ist möglich, wenn die Nennweite verringert wird, so dass sich die Strömungsgeschwindigkeit bei gleichbleibendem Massenstrom insgesamt erhöht. Dadurch würde der Klappenteller unter einem größeren Winkel geöffnet werden können.

Eine weitere Möglichkeit, die geringe Öffnungswinkel zu vermeiden, besteht darin, ein Gegengewicht derart anzubringen, dass das Strömungsmedium einen geringeren Widerstand erfährt. Dadurch wird eine Drehmomentverringerung des Klappentellers erreicht, was zu einem größeren Öffnungswinkel führt.

Eine weitere Möglichkeit Schwingungen zu vermeiden, besteht darin, einen Antrieb für den Klappenteller zu berücksichtigen. Allerdings wäre dadurch die Rückschlagklappe nicht mehr freischwingend und müsste daher gesteuert werden.

Die Erfindung hat es sich zur Aufgabe gemacht, die Rückschlagklappe derart zu verbessern, dass auch bei geringen Volumenströmen ein ausreichend großer Öffnungswinkel entsteht.

Gelöst wird diese Aufgabe durch eine Rückschlagklappe umfassend einen Klappenteller, der zum Verschließen und/oder Öffnen einer Klappenöffnung ausgebildet ist und ein Gehäuse, in dem die Klappenöffnung ausgebildet ist, wobei der Klappenteller eine zum Eintritt hin gerichtete Innenseite aufweist, wobei der Klappenteller einen Verengungsvorbau aufweist, der auf der Innenseite des Klappentellers angeordnet ist, wobei der Verengungsvorbau in die Klappenöffnung ragt.

Ein wesentliches Merkmal der Erfindung ist daher der Verengungsvorbau. Dieser Verengungsvorbau ragt in die

Richtung der ankommenden Strömung. Zwischen dem Verengungsvorbau und dem Gehäuse ist ein Spalt ausgebildet, an den sobald der Klappenteller geöffnet wird, das Strömungsmedium vorbeiströmt. Das Strömungsmedium strömt durch einen geringeren Strömungsquerschnitt, wenn der Verengungsvorbau in den Bereich der Klappenöffnung eintritt. Dadurch erhöht sich die Geschwindigkeit des Strömungsmediums im Spalt zwischen dem Verengungsvorbau und dem Gehäuse. Somit entsteht eine größere Kraft des Strömungsmediums auf den Klappenteller, was dazu führt, dass der Klappenteller weiter geöffnet werden kann.

Der Verengungsvorbau ist dabei vorteilhafter Weise derart ausgebildet, dass der Klappenteller beim Öffnen der Klappenöffnung vom Gehäuse wegbewegt werden kann. Das bedeutet, dass der Verengungsvorbau im Wesentlichen ein Element darstellen muss, das sobald der Klappenteller vom Gehäuse wegbewegt wird, ein Spalt zwischen dem Verengungsvorbau und dem Gehäuse entsteht, das bei einer weiteren Öffnung, d.h. ein Wegbewegen des Klappentellers vom Gehäuse der Spalt vergrößert wird.

Vorteilhafterweise weist der Klappenteller einen Hebelarm auf, der schwenkbar am Gehäuse angeordnet ist. Die Schwenkung des Klappentellers um die Schwenkachse erfolgt derart, dass sobald kein Strömungsmedium strömt, die Rückschlagklappe verschlossen ist, d.h. der Klappenteller liegt an einem Sitz im Gehäuse an. Sobald ein Strömungsmedium strömt, wird der Klappenteller vom Gehäuse wegbewegt. Dies erfolgt gegen ein Eigengewicht des Klappentellers. In Folge des Eigengewichtes des Klappentellers entstehen Drehmomente, die zu einem Schließen der Rückschlagklappe führt, sobald das Strömungsmedium nicht mehr strömt.

Vorteilhafte Weiterbildungen sind in den Unteransprüchen angegeben.

In einer weiteren vorteilhaften Weiterbildung ist der Verengungsvorbau derart ausgebildet, dass beim Öffnen und/oder Schließen zwischen dem Verengungsvorbau und dem Gehäuse ein Umfangsströmungskanal entsteht. Dieser Umfangsströmungskanal hat einen Strömungsquerschnitt, der je nach Öffnungsposition des Klappentellers klein ist. Dadurch wird zwingend die Strömungsgeschwindigkeit des Strömungsmediums beeinflusst. Erfindungsgemäß wird die Strömungsgeschwindigkeit derart beeinflusst, dass selbst bei geringen Öffnungswinkeln des Klappentellers eine hohe Strömungsgeschwindigkeit erfolgt, die eine ständige Kraft auf den Klappenteller ausübt, so dass eine Gegenkraft wirksam verhindert wird. Dadurch werden Schwingungen zwingend verhindert.

In einer weiteren vorteilhaften Weiterbildung ist die Rückschlagklappe derart ausgebildet, dass der Umfangs-Strömungskanal sich vergrößert, wenn der Klappenteller beim Öffnen vom Gehäuse wegbewegt wird. Somit wird insbesondere bei großen Öffnungswinkeln eine niedrigre Strömungsgeschwindigkeit erreicht, wenn der Verengungsvorbau aus der Klappenöffnung tritt. Dadurch werden die Druckverluste bei großen Volumenströmen verringert.

Vorteilhafter Weise wird der Verengungsvorbau als Kalotte ausgebildet. Eine Kalotte ist im Wesentlichen ein Schnitt durch eine Kugel. Der abgeschnittene Teil der Kugel bildet die Kalotte und ist im Wesentlichen symmetrisch. Diese Kalotte, die im Querschnitt einen Kreisbogen darstellt, wird auf eine Innenseite des Klappentellers angebracht. Zwischen der Kalotte und dem Gehäuse entsteht der Umfangs-Strömungskanal.

Vorteilhafter Weise weist die Höhe der Kalotte im Wesentlichen 10 bis 80% der Länge des Radius der ursprünglichen Kugel auf.

In einer weiteren vorteilhaften Weiterbildung ist der Verengungsvorbau zur Klappenöffnung hin konvex ausgebildet. Dadurch wird ein weiterer Freiheitsgrad angeboten, der es ermöglicht, Strömungsbedingungen in Abhängigkeit von der Temperatur und dem Druck zu berücksichtigen. Es wird hier insbesondere vorgeschlagen, von der strengen Geometrie der Kalotte, die darüber hinaus symmetrisch ist, sich zu entfernen, und einen Freiheitsgrad zu öffnen, der sich darin niederschlägt, dass der Verengungsvorbau zur Klappenöffnung hin im Wesentlichen konvex ausgebildet ist. Konvex bedeutet hierbei eine bauchige Ausführung an der Verengungsvorbauoberfläche. Im mathematischen Sinne bedeutet hierbei konvex, dass eine Verbindungsgerade innerhalb des Verengungsvorbaus liegt und die Verengungsvorbauoberfläche lediglich an zwei Punkten berührt.

Des Weiteren wird die Aufgabe der Erfindung durch ein Verfahren zum Schließen und/oder Öffnen einer Rückschlagklappe gelöst, wobei zwischen einem Klappenteller, der zum Verschließen und Öffnen einer Klappenöffnung in einem Gehäuse ausgebildet wird und dem Gehäuse ein Umfangs-Strömungskanal ausgebildet wird, wobei an dem Klappenteller ein Verengungsvorbau zur Klappenöffnung hin angeordnet wird un der Verengungsvorbau konvex ausgebildet wird. Der hierbei entstehende Vorteil ist entsprechend der erfindungsgemäßen Rückschlagklappe zu entnehmen.

Die Erfindung wird anhand eines Ausführungsbeispiels näher erläutert. Bauteile mit gleichen Bezugszeichen weisen im Wesentlichen die gleiche Wirkungsweise auf. Es zeigen:
- Figur 1: eine Rückschlagklappe im geschlossenen Zustand,
- Figur 2: die Rückschlagklappe im geöffneten Zustand mit geringem Öffnungswinkel,
- Figur 3: die Rückschlagklappe im geöffneten Zustand mit großem Öffnungswinkel.

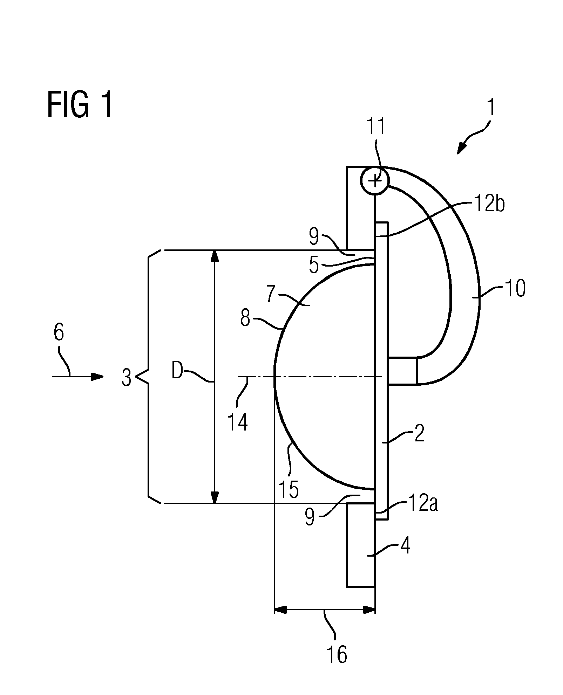

Die Figur 1 offenbart eine Rückschlagklappe 1 im geschlossenen Zustand. Dabei umfasst die Rückschlagklappe 1 einen Klappenteller 2 auf, der zum Verschließen und/oder Öffnen einer Klappenöffnung 3 ausgebildet ist. Die Klappenöffnung 3 ist in erster Näherung ein Loch in einem Gehäuse 4. Somit weist die Klappenöffnung 3 einen Durchmesser D auf. Des Weiteren weist der Klappenteller 2 eine zum Gehäuse 4 hin gerichtete Innenseite 5 auf, wobei der Klappenteller 2 ebenfalls zum Eintritt hingerichtet ist. Im Betrieb strömt in einer Strömungsrichtung 6 ein Strömungsmedium innerhalb eines nicht näher dargestellten Rohres. Die Rückschlagklappe 1 ist somit innerhalb dieses Rohres angeordnet. An der Innenseite 5 des Klappentellers 2 ist ein Verengungsvorbau 7 angeordnet. Der Verengungsvorbau 7 weist eine Verengungsvorbauoberfläche 8 auf. Der Verengungsvorbau 7 ragt in die Klappenöffnung 3 und bildet zwischen dem Gehäuse 4 und der Verengungsvorbau-Oberfläche 8 einen Umfangs-Strömungskanal 9. In diesem Umfangs-Strömungskanal 9 strömt das Strömungsmedium. Der Klappenteller 2 ist über einen Hebelarm 10 an eine Schwenkachse 11 mechanisch verbunden. Das Gebilde aus Hebelarm 10, Klappenteller 2 und Verengungsvorbau 7 weist ein Eigengewicht auf, das dazu führt, dass wenn kein Strömungsmedium in die Strömungsrichtung 6 strömt, die Innenseite 5 des Klappentellers 2 an einem Sitz 12 des Gehäuses 4 anliegt. Dabei bildet sich ein unterer Sitz 12a und ein oberer Sitz 12b aus. Beim Öffnen des Klappentellers 2 entsteht zunächst ein Spalt am unteren Sitz 12a und am oberen Sitz 12b wobei der Spalt am unteren Sitz 12a größer ist als der Spalt am oberen Sitz 12b.

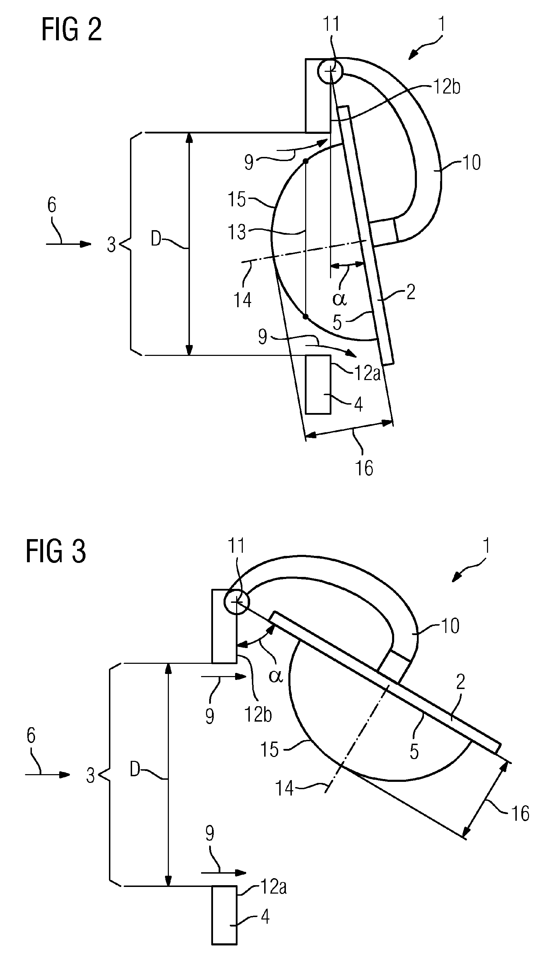

Die Figur 2 zeigt eine erste Darstellung in einem leicht geöffneten Zustand. Zu sehen ist, dass am unteren Sitz 12a ein größerer Spalt entsteht als am oberen Sitz 12b. Dies liegt in Folge der Schwenkung um die Schwenkachse 11 begründen.

In alternativen Ausführungsformen kann auf die Schwenkachse 11 verzichtet und der Klappenteller 2 insgesamt parallel zur Strömungsrichtung 6 bewegt werden.

Der Klappenteller 2 ist hierbei derart ausgebildet, dass beim Öffnen der Klappenöffnung 3 vom Gehäuse 4 wegbewegbar ist. Sobald wie in Figur 2 zu sehen ist, der Klappenteller leicht geöffnet wird, öffnet sich der Umfangs-Strömungskanal 9. Dieser ist vergleichsweise geringer als wenn der Verengungsvorbau 7 nicht vorhanden wäre. Dadurch ist die Strömungsgeschwindigkeit im Sitz größer als wenn der Verengungsvorbau 7 nicht vorhanden wäre. Die Rückschlagklappe 1 ist hierbei derart ausgebildet, dass der Umfangsströmungskanal 9 sich vergrößert, wenn der Klappenteller 2 sich beim Öffnen vom Gehäuse 2 wegbewegt. Die Strömungsgeschwindigkeit wird dadurch wieder etwas geringer. Wichtig ist, dass bei den geringen Öffnungswinkeln die Strömungsgeschwindigkeit hoch ist, damit eine vergleichsweise hohe und permanente Kraft auf den Klappenteller 2 ausgeübt wird, damit dieser im geöffneten Zustand bleibt und nicht auf den Sitz 12 des Gehäuses 4 stößt.

Der Verengungsvorbau 7 ist hierbei derart ausgebildet, dass dieser zur Klappenöffnung 3 hin konvex ausgebildet ist. Konvex bedeutet, dass eine Verbindungsgerade 13 zwei Punkte der Verengungs-Oberfläche 8 miteinander verbindet, wobei die Verbindungsgerade 13 stets innerhalb des Verengungsvorbaus 7 angeordnet ist.

Für die in den Figuren 1, 2 und 3 dargestellte Ausführungsform des Verengungsvorbaus 7 ist eine Kalotte gewählt. Eine Kalotte ist im Wesentlichen ein Schnitt durch eine Kugel. Daher ist die Kalotte zu einer Symmetrieachse 14 symmetrisch ausgebildet. Die Höhe der Kalotte 15 ist so zu bemessen, dass sie rechtzeitig in die Klappenöffnung eintritt, um ein Aufschlagen/Schwingen des Klappentellers auf den Sitz verhindert. Beispielsweise weist die Höhe der Kalotte 15 hierbei im Wesentlichen 10% bis 80% der Länge des Radius' der Kugel auf.

Weitere mögliche Höhen 16 der Kalotte sind 20% bis 70%, 30% bis 60% oder 10% bis 35%.

Die Figur 2 zeigt eine Öffnung der Rückschlagklappe 1 bezüglich des Klappentellers 2 zum Gehäuse 4 unter einem Winkel α von ca. 10°. Der Winkel α wird hierbei zwischen dem Gehäuse 4 und dem Klappenteller 2 ausgebildet.

Die Figur 3 zeigt eine weitere vergleichsweise große Öffnung des Klappentellers 2, wobei der Winkel α-Werte über 45° beträgt.

## Patentansprüche

1. Rückschlagklappe (1) umfassend einen Klappenteller (2), der zum Verschließen und/oder Öffnen einer Klappenöffnung (3) ausgebildet ist,
ein Gehäuse (4), in dem die Klappenöffnung (3)ausgebildet ist, wobei der Klappenteller (2) eine zum Gehäuse (4) hin gerichtete Innenseite (5) aufweist,
**dadurch gekennzeichnet, dass**
der Klappenteller (2) einen Verengungsvorbau (7) aufweist, der auf der Innenseite (5) des Klappentellers (2) angeordnet ist, wobei der Verengungsvorbau (7) in die Klappenöffnung (3) ragt.

2. Rückschlagklappe (1) nach Anspruch 1,
wobei der Klappenteller (2) beim Öffnen der Klappenöffnung (3) vom Gehäuse (4) weg bewegbar ist ausgebildet ist.

3. Rückschlagklappe (1) nach Anspruch 1 oder 2,
wobei der Klappenteller (2) einen Hebelarm (10) aufweist, der schwenkbar am Gehäuse (4) angeordnet ist.

4. Rückschlagklappe (1) nach einem der vorhergehenden Ansprüche,
wobei der Verengungsvorbau (7) derart ausgebildet ist, dass beim Öffnen und/oder Schließen zwischen dem Verengungsvorbau (7) und dem Gehäuse (4) ein Umfangs-Strömungskanal (9) entsteht.

5. Rückschlagklappe (1) nach Anspruch 4,
wobei die Rückschlagklappe (1) erart ausgebildet ist, dass der Umfangs-Strömungskanal (9) sich vergrößert, wenn der Klappenteller (2) sich beim Öffnen vom Gehäuse (4) weg bewegen.

6. Rückschlagklappe (1) nach einem der vorhergehenden Ansprüche,
wobei der Verengungsvorbau (7) als Kalotte (15) ausgebildet ist.

7. Rückschlagklappe (1) nach Anspruch 6,
wobei die Höhe der Kalotte (15) im Wesentlichen 10% - 80% der Länge des Radiuses der Kalotte (15) aufweist.

8. Rückschlagklappe (1) nach einem der vorhergehenden Ansprüche,
wobei der Verengungsvorbau (7), zur Klappenöffnung (3) hin konvex ausgebildet ist.

9. Verfahren zum Öffnen und Schließen einer Rückschlagklappe (1),
wobei zwischen einem Klappenteller (2), der zum Verschließen und Öffnen einer Klappenöffnung (3) in einem Gehäuse (4) ausgebildet wird und dem Gehäuse (4) ein Umfangs-Strömungskanal (9) ausgebildet wird, wobei an dem Klappenteller (2) ein Verengungsvorbau (7) zur Klappenöffnung (3) hin angeordnet wird und der Verengungsvorbau (7) konvex ausgebildet wird.
